# EUROPEAN PATENT APPLICATION

(11) **EP 4 692 000 A1**
(43) Date of publication of application: **11.02.2026**
(21) Application number: 23930751.5
(22) Date of filing: 15.09.2023
(51) Int. Cl.: C02F 1/42, C02F 1/469

(54) **METHOD FOR OPERATING ELECTRIC DEIONIZER**

(30) Priority: 30.03.2023 JP 2023055341
(71) Applicant: Kurita Water Industries Ltd., Tokyo 164-0001 (JP)
(72) Inventor: TABEI Rena, Tokyo 164-0001 (JP)
(74) Representative: TBK
(86) International application number: PCT/JP2023/033727
(87) International publication number: WO 2024/202119

(57) **Abstract**

Treated water (feed water) W4 with a pH of 8 or higher is supplied to an electric deionizer 8, and treated water W4 is supplied to a desalting chamber 25 of the electric deionizer 8. Then, a portion of desalted water W5 that has passed through the desalting chamber 25 is taken and supplied to a concentration chamber 26 in a direction reverse to the desalting chamber 25. Accordingly, even if the pH of the treated water (feed water) W4 is 8 or higher, an ion concentration in concentrated water of the concentration chamber 26 becomes lower toward the extraction side of the desalting chamber 25. In particular, movement of inorganic carbonate ions from the concentration chamber 26 to the desalting chamber 25 can be reduced near the outlet of the desalting chamber of the electric deionizer 8, and a decrease in the resistivity of the desalted water W5 can be prevented. According to such an operation method of an electric deionizer, even if feed water with a high pH is supplied to the electric deionizer, high-quality treatment water can be efficiently produced.

## Description

### Technical Field

The present invention relates to an operation method of an electric deionizer, and particularly relates to an operation method of an electric deionizer capable of producing high-quality treatment water even if feed water with a high pH is supplied to an electric deionizer.

### Related Art

Conventionally, ultrapure water used in the field of electronic industries such as semiconductors is produced by treating raw water in an ultrapure water production system composed of a pretreatment system, a primary pure water production device, and a subsystem (secondary pure water production device) that treats primary pure water.

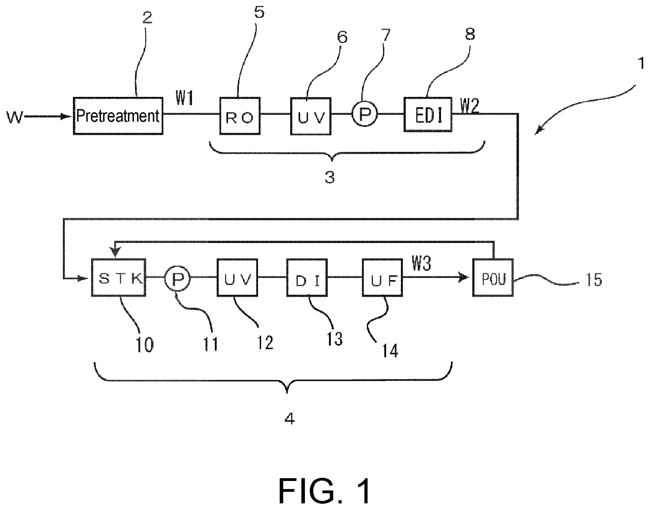

For example, as shown in FIG. 1, an ultrapure water production system 1 is composed of three stages of devices, including a pretreatment device 2, a primary pure water production device (pure water production device) 3, and a subsystem 4. In the pretreatment device 2 of such an ultrapure water production system 1, pretreatment is applied to raw water W by filtration, coagulation sedimentation, a precision filtration membrane, etc., and suspended substances are mainly removed.

The primary pure water production device 3 includes a reverse osmosis membrane device 5 that treats pretreatment water W1, an ultraviolet oxidation device 6, an electric deionizer 8, and a feed water pump 7 that supplies feed water to the electric deionizer 8. In the primary pure water production device 3, most of electrolytes, fine particles, viable bacteria, etc. in the pretreatment water W1 are removed and organic matter is decomposed to obtain primary pure water (pure water) W2.

The subsystem 4 includes a sub tank 10, a supply pump 11, an ultraviolet oxidation device 12, a non-regenerative mixed bed ion exchange device 13, and an ultrafiltration membrane (UF membrane) 14, and is configured to recirculate from the ultrafiltration membrane (UF membrane) 14 through a point of use 15 to the sub tank 10. In the subsystem 4, trace amounts of organic matter (TOC component) contained in the primary pure water W2 produced by the primary pure water production device 3 are oxidized and decomposed, carbonate ions, organic acids, anionic substances, and further, metal ions and cationic substances are removed, and finally fine particles are removed by the ultrafiltration (UF) membrane 14 to produce ultrapure water W3, which is supplied to the point of use 15, and unused ultrapure water W3 is recirculated to the sub tank 10.

In the primary pure water production device 3 of the ultrapure water production system 1 as described above, to improve treatment performance such as reducing the boron concentration in the reverse osmosis membrane device 5, alkali such as NaOH is injected into the feed water of the reverse osmosis membrane device to have a pH of 8 or higher, and ionization of various components is promoted to perform treatment.

The electric deionizer 8 used in such a primary pure water production device 3 generally includes cation exchange membranes and anion exchange membranes alternately arranged between the cathode and the anode, and includes desalting chambers and concentration chambers formed by configuring compartments with the cation exchange membranes and the anion exchange membranes, and the desalting chambers and the concentration chambers are filled with ion exchange resins. The ion exchange membranes such as cation exchange membranes and anion exchange membranes may be heterogeneous membranes produced by adding a binder such as polystyrene to powdered ion exchange resins, homogeneous membranes produced by polymerization of styrene-divinylbenzene and the like, as well as membranes produced by graft polymerization of various monomers having anion exchange functions or cation exchange functions, etc.

In addition, the desalting chambers are filled with ion exchangers (anion exchangers and cation exchangers) composed of ion exchange resins, ion exchange fibers, or graft exchangers, etc., in a mixed or multi-layered form. In addition, the concentration chambers, the anode chamber, and the cathode chamber are also filled with ion exchangers.

The electric deionizer 8 is provided with a water flow means that flows treated water (feed water) through the desalting chambers to extract treatment water, and a concentration water flow means that flows concentration water through the concentration chambers, and generally the direction of flowing treated water through the desalting chambers and the direction of flowing concentration water through the concentration chambers are configured to be the same.

As the pure water production device (primary pure water production device in the ultrapure water production device) using such an electric deionizer, it is common to take the treatment water of the reverse osmosis membrane device as the feed water of the electric deionizer, or treat the treatment water of the reverse osmosis membrane device with an ultraviolet oxidation device to then take as the feed water of the electric deionizer. Furthermore, to reduce the boron concentration, alkali is added to the feed water of the reverse osmosis membrane device to adjust the pH to 8 or higher.

### SUMMARY OF INVENTION

### Problem to Be Solved by Invention

However, in the case where the pH of the feed water of the electric deionizer is high, with the method of flowing the treated water of the desalting chambers and the concentration water of the concentration chambers in parallel flow, there is a problem that the resistivity of the treatment water decreases, i.e., the water quality of the treatment water deteriorates.

The present invention has been made in view of the above problem, and an objective thereof is to provide an operation method of an electric deionizer capable of producing high-quality treatment water even if feed water with a high pH is supplied to an electric deionizer.

### Means for Solving Problem

To achieve the above objective, the present invention provides an operation method of an electric deionizer, including: flowing feed water with a pH of 8 or higher through a desalting chamber of an electric deionizer, and flowing treatment water of the desalting chamber or the feed water of the desalting chamber through a concentration chamber of the electric deionizer in a direction reverse to the desalting chamber (Invention 1). Particularly, in the above invention (Invention 1), the pH of the feed water of the electric deionizer is preferably 8 to 11 (Invention 2).

According to such inventions (Inventions 1 and 2), if feed water with a pH of 8 or higher, particularly a pH of 8 to 11, is supplied to the electric deionizer, the water quality of the treatment water (desalted water) deteriorates, but by using the feed water or the treatment water as the concentration water of the electric deionizer and flowing water with the water flow directions of the desalting chamber and the concentration chamber being counter flows (reverse directions), deterioration in the water quality (e.g., resistivity) of the treatment water can be prevented.

In the above invention (Invention 2), an inorganic carbonate concentration of the feed water of the electric deionizer is preferably 1 mg/L as CO₂ or less (Invention 3).

According to such an invention (Invention 3), by treating such feed water with the electric deionizer, movement of inorganic carbonate ions from the concentration chamber to the desalting chamber can be reduced near the outlet of the desalting chamber of the electric deionizer, and a decrease in the resistivity of the treatment water can be prevented. In addition, with such feed water, it can be suitably used as feed water of the concentration water.

In the above invention (Invention 3), the feed water of the electric deionizer is preferably permeate water of a reverse osmosis membrane (Invention 4).

According to such an invention (Invention 4), if treated water with a pH of 8 to 11 is treated with a reverse osmosis membrane, since the removal rate of weakly ionic impurities such as inorganic carbonate and boron is improved, it can not only be suitable as feed water of the desalting chamber of the electric deionizer, but is also suitable as concentration water supplied to the concentration chamber.

In the above inventions (Inventions 1 to 4), concentration water flowing through the concentration chamber of the electric deionizer is preferably switched between the treatment water of the desalting chamber and the feed water of the desalting chamber according to an inorganic carbonate concentration of the feed water of the electric deionizer (Invention 5).

According to such an invention (Invention 5), in the case where the inorganic carbonate concentration of the feed water of the electric deionizer is low, the feed water is also circulated as the concentration water. On the other hand, in the case where the inorganic carbonate concentration of the feed water of the electric deionizer is high, by circulating the treatment water that has been desalted in the desalting chamber as the concentration water, deionized water can also be produced efficiently in terms of the water usage amount while maintaining the water quality of the electric deionizer.

### Effects of Invention

According to the operation method of the electric deionizer of the present invention, by supplying feed water with a pH of 8 or higher to the electric deionizer, flowing the feed water through the desalting chamber of the electric deionizer, and flowing the treatment water of the desalting chamber or the feed water of the desalting chamber through the desalting chamber of the electric deionizer in a direction reverse to the desalting chamber, deterioration in the water quality of the electric deionizer can be prevented.

### BRIEF DESCRIPTION OF THE DRAWINGS

[FIG. 1] is a flow diagram showing an ultrapure water production system to which an operation method of an electric deionizer of the present invention is applicable.
[FIG. 2] is a schematic diagram showing flow of water of desalting chambers and concentration chambers in an operation method of an electric deionizer according to a first embodiment of the present invention.
[FIG. 3] is a schematic diagram showing flow of water of desalting chambers and concentration chambers in an operation method of an electric deionizer according to a second embodiment of the present invention.
[FIG. 4] is a schematic diagram showing flow of water of desalting chambers and concentration chambers in an operation method of an electric deionizer according to a third embodiment of the present invention.
[FIG. 5] is a graph showing measurement results of a resistivity of treatment water of an electric deionizer during counter flow of treatment water in Example 1.
[FIG. 6] is a graph showing measurement results of a resistivity of treatment water of an electric deionizer during parallel flow of feed water.
[FIG. 7] is a graph showing a relationship between an inorganic carbonate concentration and a pH.

### EMBODIMENTS FOR IMPLEMENTING INVENTION

### [First embodiment]

Hereinafter, an operation method of an electric deionizer according to a first embodiment of the present invention will be described with reference to the attached drawings.

### (Electric deionizer)

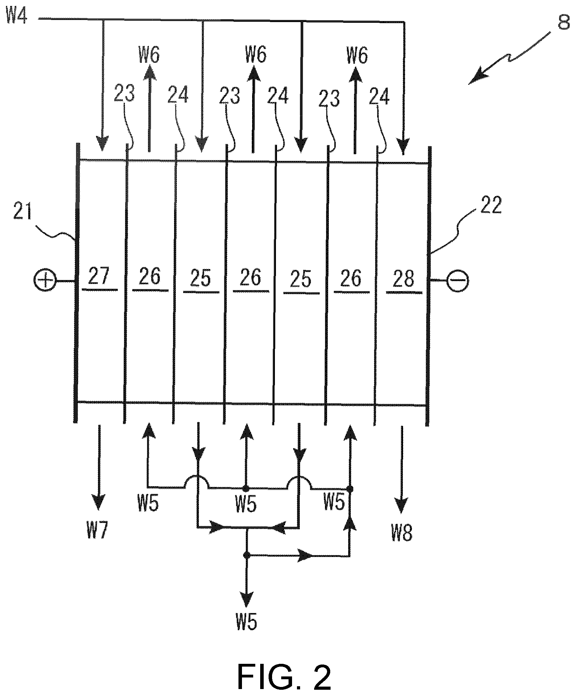

FIG. 2 shows flow of water of desalting chambers and concentration chambers in an electric deionizer to which the operation method of this embodiment is applicable. In FIG. 2, an electric deionizer 8 includes multiple anion exchange membranes 23 and cation exchange membranes 24 alternately arranged between electrodes (anode 21 and cathode 22) to alternately form desalting chambers 25 and concentration chambers 26, and includes an anode chamber 27 and a cathode chamber 28 formed on both sides. The desalting chambers 25 are filled with ion exchangers (anion exchangers and cation exchangers) (not shown in the figure) composed of ion exchange resins, ion exchange fibers, or graft exchangers, etc., in a mixed or multi-layered form. Similarly, the concentration chambers 26, the anode chamber 27, and the cathode chamber 28 are also filled with ion exchangers.

The electric deionizer 8 is provided with a concentration chamber water flow means (not shown) that flows treated water (feed water) W4 through the desalting chambers 25 to extract desalted water (treatment water) W5, and takes portions of the desalted water W5 to flow through the concentration chambers 26, and has a configuration in which the desalted water W5 is introduced into the concentration chambers 26 from the side close to the extraction ports of the desalted water W5 of the desalting chambers 25, and flows out from the side close to the inlets of the treatment raw water (treated water W4) of the desalting chambers 25, i.e., the desalted water W5 is introduced into the concentration chambers 26 from a direction opposite to the flow direction of the treated water W4 in the desalting chambers 25, and concentration water W6 is discharged. On the other hand, the treated water W4 is configured to flow through the anode chamber 27 and the cathode chamber 28 as electrode water, and is discharged as anode discharge water W7 and cathode discharge water W8, respectively.

### (Feed water (treated water) of electric deionizer)

In this embodiment, the electric deionizer 8 shown in FIG. 2 is configured to be located on a post-stage of a reverse osmosis membrane device that treats pretreatment water of a primary pure water device, and, as needed, an ultraviolet oxidation device. Treatment water of the reverse osmosis membrane device is supplied as treated water (feed water) W4 of the electric deionizer 8. In the reverse osmosis membrane device 8, since alkali is added for the purpose of reducing boron concentration, treatment water with a pH of 8 or higher is supplied to the electric deionizer 8. If the pH of the feed water of the reverse osmosis membrane device is configured to be 11 or higher, the amount of chemical used increases, and not only does the cost associated with chemicals increases, but an improvement in the effect corresponding thereto cannot be obtained and cost effectiveness decreases. Thus, the pH is desirably configured to be approximately 8 to 11. Furthermore, the inorganic carbonate concentration (IC) of the feed water W4 of the electric deionizer is preferably 1 mg/L as CO₂ or less. The reverse osmosis (RO) membrane device removes salts as well as ionic and colloidal TOC, and also ionizes and removes carbon dioxide. The remaining organic matter is decomposed in the ultraviolet oxidation device 6 as needed.

### [Operation method of electric deionizer]

Next, an operation method of an electric deionizer according to this embodiment using the electric deionizer 8 having the configuration described above will be described.

First, treated water (feed water) W4 with a pH of 8 or higher is flowed through the desalting chambers 25 of the electric deionizer 8 to remove ionic impurities and the like.

Specifically, as shown in FIG. 2, the treated water W4 is supplied to the desalting chambers 25 of the electric deionizer 8. Then, portions of desalted water W5 that has passed through the desalting chambers 25 are taken and supplied to the concentration chambers 26 in a direction reverse to the desalting chambers 25. In this manner, a part of the treatment water W5 that has passed through the desalting chambers 25 is flowed through the concentration chambers 26 as concentrated water in a single-pass counter-flow manner in a direction reverse to the water flow direction of the desalting chambers 25, and concentration water W6 is discharged from the concentration chambers 26 to outside the system. Accordingly, since the ion concentration in the concentrated water of the concentration chambers 26 becomes lower toward the extraction side of the desalting chambers 25, diffusion from the concentration chambers 26 to the desalting chambers 25 can be suppressed, and good water quality of the treatment water W5 can be maintained. In particular, movement of inorganic carbonate ions from the concentration chambers 26 to the desalting chambers 25 can be reduced near the outlets of the desalting chambers of the electric deionizer 8, and a decrease in the resistivity of the desalted water W5 can be prevented.

By taking portions of the desalted water W5 to supply to the concentration chambers 26 in a direction reverse to the desalting chambers 25, the operation method of the electric deionizer according to the first embodiment as described above is excellent in the removal performance of ions derived from inorganic carbonate, and is thus particularly effective in the case where the inorganic carbonate concentration (IC) of the feed water W4 of the electric deionizer exceeds 1 mg/L as CO₂.

### [Second embodiment]

Next, an operation method of an electric deionizer according to a second embodiment of the present invention will be described with reference to the attached drawings.

### (Electric deionizer)

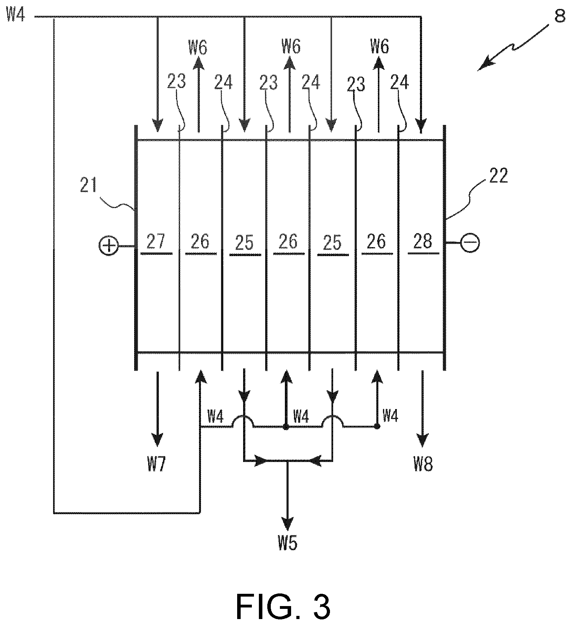

FIG. 3 shows flow of water of desalting chambers and concentration chambers in an electric deionizer to which the operation method of this embodiment is applicable. In FIG. 3, an electric deionizer 8 includes multiple anion exchange membranes 23 and cation exchange membranes 24 alternately arranged between electrodes (anode 21 and cathode 22) to alternately form desalting chambers 25 and concentration chambers 26, and includes an anode chamber 27 and a cathode chamber 28 formed on both sides. The desalting chambers 25 are filled with ion exchangers (anion exchangers and cation exchangers) (not shown in the figure) composed of ion exchange resins, ion exchange fibers, or graft exchangers, etc., in a mixed or multi-layered form. Similarly, the concentration chambers 26, the anode chamber 27, and the cathode chamber 28 are also filled with ion exchangers.

The electric deionizer 8 is provided with a concentration chamber water flow means (not shown) that flows treated water (feed water) W4 through the desalting chambers 25 to extract desalted water (treatment water) W5, and flows the treated water (feed water) W4 through the concentration chambers 26, and has a configuration in which the treated water (feed water) W4 is supplied to the concentration chambers 26 in a direction reverse to the desalting chambers 25 and flows out from the side close to the outlets of treatment raw water (treated water W4) of the desalting chambers 25, i.e., the treated water (feed water) W4 is flowed from a direction opposite to the flow direction of the treated water W4 in the desalting chambers 25, and concentration water W6 is discharged. On the other hand, the treated water W4 is configured to flow through the anode chamber 27 and the cathode chamber 28 as electrode water, and is discharged as anode discharge water W7 and cathode discharge water W5, respectively.

### (Feed water (treated water) of electric deionizer)

In this embodiment, the same feed water (treated water) as in the first embodiment described above may be used as the feed water (treated water) of the electric deionizer.

### [Operation method of electric deionizer]

Next, an operation method of an electric deionizer according to this embodiment using the electric deionizer 8 having the configuration described above will be described.

First, treated water (feed water) W4 with a pH of 8 or higher is flowed through the desalting chambers 25 of the electric deionizer 8 to remove ionic impurities and the like.

Specifically, as shown in FIG. 3, the treated water W4 is supplied to the desalting chambers 25 of the electric deionizer 8. On the other hand, the treated water W4 is also supplied to the concentration chambers 26 in a direction reverse to the desalting chambers 25. In this manner, the treated water W4 is flowed through the concentration chambers 26 as concentrated water in a single-pass counter-flow manner in a direction reverse to the water flow direction of the desalting chambers 25, and concentration water W6 is discharged from the concentration chambers 26 to outside the system. Accordingly, even if the pH of the treated water (feed water) W4 is 8 or higher, since the ion concentration in the concentrated water of the concentration chambers 26 becomes lower toward the extraction side of the desalting chambers 25, diffusion from the concentration chambers 26 to the desalting chambers 25 can be suppressed, and good water quality of the treatment water W5 can be maintained. In particular, movement of inorganic carbonate ions from the concentration chambers 26 to the desalting chambers 25 can be reduced near the outlets of the desalting chambers of the electric deionizer 8, and a decrease in the resistivity of the desalted water W5 can be prevented.

Since the treated water W4 is supplied to the concentration chambers 26 in a direction reverse to the desalting chambers 25, the operation method of the electric deionizer according to the second embodiment as described above can maintain the water quality of the desalted water W5 of the electric deionizer at a high level as there is little inorganic carbonate in the treated water W4, and is thus particularly effective in the case where the inorganic carbonate concentration (IC) of the feed water W4 of the electric deionizer is 1 mg/L as CO₂ or less.

### [Third embodiment]

Next, an operation method of an electric deionizer according to a third embodiment of the present invention will be described with reference to the attached drawings.

### (Electric deionizer)

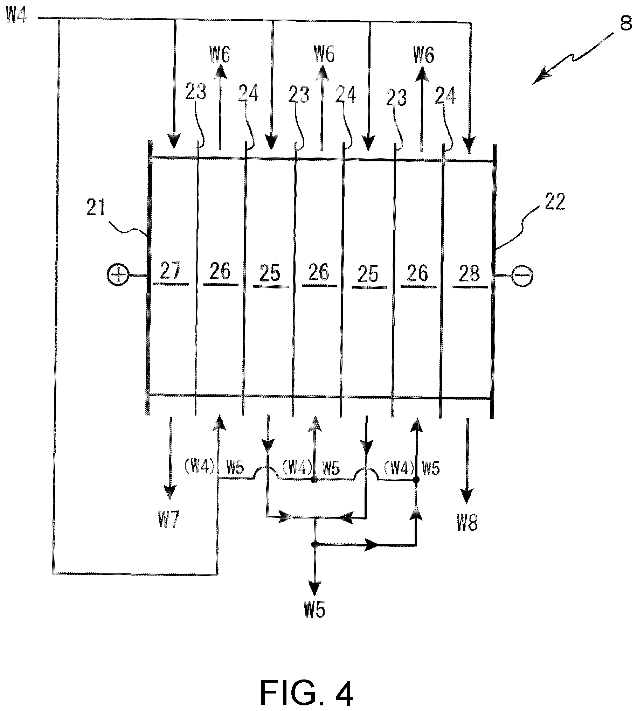

FIG. 4 shows flow of water of desalting chambers and concentration chambers in an electric deionizer to which the operation method of this embodiment is applicable. In FIG. 4, an electric deionizer 8 includes multiple anion exchange membranes 23 and cation exchange membranes 24 alternately arranged between electrodes (anode 21 and cathode 22) to alternately form desalting chambers 25 and concentration chambers 26, and includes an anode chamber 27 and a cathode chamber 28 formed on both sides. The desalting chambers 25 are filled with ion exchangers (anion exchangers and cation exchangers) (not shown in the figure) composed of ion exchange resins, ion exchange fibers, or graft exchangers, etc., in a mixed or multi-layered form. Similarly, the concentration chambers 26, the anode chamber 27, and the cathode chamber 28 are also filled with ion exchangers.

The electric deionizer 8 is provided with a concentration chamber water flow means (not shown) that flows treated water (feed water) W4 through the desalting chambers 25 to extract desalted water (treatment water) W5, and takes portions of the desalted water W5 to flow through the concentration chambers 26, and is capable of switching, by a switching means (not shown), between introducing the desalted water W5 into the concentration chambers 26 from the side close to the extraction ports of the desalted water W5 of the desalting chambers 25, or introducing the treated water (feed water) W4 into the concentration chambers 26 from the side close to the extraction ports of the desalted water W5 of the desalting chambers 25. A measurement means (including an inference means) (not shown) measuring the inorganic carbonate concentration (IC) of the treated water (feed water) W4 is provided, and based on the measurement results of the measurement means measuring the inorganic carbonate concentration (IC), it is possible to switch between introducing the desalted water W5 or the treated water (feed water) W4 into the concentration chambers 26.

### (Feed water (treated water) of electric deionizer)

In this embodiment, the same feed water (treated water) as in the first embodiment described above may be used as the feed water (treated water) of the electric deionizer.

### [Operation method of electric deionizer]

Next, an operation method of an electric deionizer of this embodiment using the electric deionizer 8 having the configuration described above will be described.

First, treated water (feed water) W4 with a pH of 8 or higher is flowed through the desalting chambers 25 of the electric deionizer 8 to remove ionic impurities and the like.

Specifically, as shown in FIG. 4, the treated water W4 is supplied to the desalting chambers 25 of the electric deionizer 8. On the other hand, based on the measurement results of the measurement means (not shown) measuring the inorganic carbonate concentration (IC), switching is performed between introducing the desalted water W5 or the treated water (feed water) W4 into the concentration chambers 26, and the desalted water W5 or the treated water W4 is supplied to the concentration chambers 26 in a direction reverse to the desalting chambers 25. In this manner, water is flowed through the concentration chambers 26 in a single-pass counter-flow manner in a direction reverse to the water flow direction of the desalting chambers 25, and concentration water W6 is discharged from the concentration chambers 26 to outside the system. Accordingly, even if the pH of the treated water (feed water) W4 is 8 or higher, since the ion concentration in the concentrated water of the concentration chambers 26 becomes lower toward the extraction side of the desalting chambers 25, diffusion from the concentration chambers 26 to the desalting chambers 25 can be suppressed, and good water quality of the treatment water W5 can be maintained. In particular, movement of inorganic carbonate ions from the concentration chambers 26 to the desalting chambers 25 can be reduced near the outlets of the desalting chambers of the electric deionizer 8, and a decrease in the resistivity of the desalted water W5 can be prevented.

In the operation method of the electric deionizer according to the third embodiment as described above, by switching between introducing the desalted water W5 or the treated water (feed water) W4 into the concentration chambers 26 according to the inorganic carbonate concentration (IC) of the feed water W4 of the electric deionizer, the utilization rate of the desalted water W5 can be enhanced while maintaining the water quality of the desalted water W5.

Although the operation method of the electric deionizer of the present invention has been described above with reference to the attached drawings, the present invention is not limited to the above embodiments, and various modifications may be implemented. For example, in the above embodiments, the treatment water of the reverse osmosis membrane device is taken as the feed water of the electric deionizer, but the embodiments are not limited thereto as long as the pH of the feed water of the electric deionizer is 8 or higher.

### Examples

Hereinafter, the present invention will be described more specifically with reference to Examples and Comparative Examples, but the present invention is not limited to Examples below.

### [Example 1]

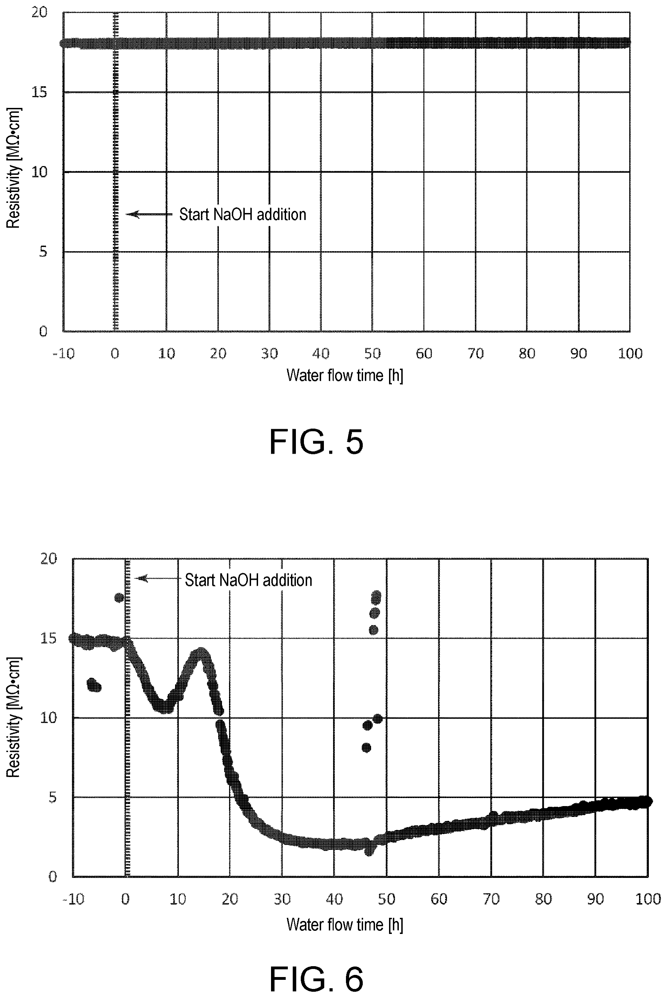

An electric deionizer 8 for testing with the number of cells shown in Table 1 having the structure shown in FIG. 2 was prepared, feed water (treated water) W4 shown in Table 3 was flowed through the desalting chamber 25 under water flow conditions shown in Table 2, portions of treatment water W5 were taken and supplied to the concentration chambers 26 in a direction reverse to the desalting chamber 25 (treatment water counter flow), and the electric deionizer 8 was operated at constant current. Then, after adding NaOH to the feed water (treated water) W4 to have a pH of 10.5, the resistivity of the treatment water W5 was measured. The results are shown in FIG. 5.

**[Table 1]**

| Configuration of electric deionizer | |
|---|---|
| Constituent element | Number of cells |
| Desalting chamber | 1 |
| Concentration chamber | 2 |
| Electrode chamber (anode) | 1 |
| Electrode chamber (cathode) | 1 |

**[Table 2]**

| Water flow conditions | |
|---|---|
| Desalting chamber flow rate | 200 mL/min |
| Concentration chamber flow rate | 30 mL/min |
| Electrode chamber flow rate | 50 mL/min |
| Current value | 0.85 A |
| Water flow method | Treatment water counter flow |

**[Table 3]**

| Feed water conditions | |
|---|---|
| Added component | Concentration |
| B(OH)₃ | 10 µg/L as B |
| Na₂SiO₃•9H₂O | 100 µg/L as SiO₂ |
| CaCl₂•2H₂O | 10 µg/L as Ca |
| MgCl₂•6H₂O | 10 µg/L as Mg |
| NaHCO₃ | 270 µg/L as C |

As is clear from FIG. 5, even after adding NaOH to the feed water (treated water) W4 to have a pH of 10.5, there was almost no change in the resistivity of the treatment water W5 of the electric deionizer 8. It is thought that, since diffusion of ions from the concentration chambers 26 to the desalting chamber 25 was prevented by flowing the treatment water W5 through the concentration chambers 26, water quality was maintained, and the resistivity of the treatment water did not decrease.

### [Comparative Example 1]

An electric deionizer 8 for testing with the number of cells shown in Table 1 having the structure shown in FIG. 2 was prepared, and the electric deionizer 8 was operated at constant current with a modification that feed water (treated water) W4 shown in Table 3 was supplied to the desalting chamber 25 and the concentration chambers 26 in the same direction (feed water parallel flow) under water flow conditions shown in Table 4. Then, the resistivity of the treatment water W5 after adding NaOH to the feed water (treated water) W4 to have a pH of 10.5 was measured. The results are shown in FIG. 6.

**[Table 4]**

| Water flow conditions | |
|---|---|
| Desalting chamber flow rate | 200 mL/min |
| Concentration chamber flow rate | 30 mL/min |
| Electrode chamber flow rate | 50 mL/min |
| Current value | 0.85 A |
| Water flow method | Feed water parallel flow |

As is clear from FIG. 6, after adding NaOH to the feed water (treated water) W4 to have a pH of 10.5, the resistivity of the treatment water W5 of the electric deionizer 8 decreased significantly. This is thought to be because diffusion of ions from the concentration chambers 26 to the desalting chamber 25 occurred due to an increase in the ion concentration of the concentration chambers 26.

### [Reference Example 1]

An electric deionizer 8 for testing with the number of cells shown in Table 5 having the structure shown in FIG. 2 was prepared, and the electric deionizer 8 was operated at constant current with a modification that feed water (treated water) W4 shown in Table 7 was supplied to the desalting chambers 25 and the concentration chambers 26 in the same direction (feed water parallel flow) under water flow conditions shown in Table 6. Then, after adding NaOH to the feed water (treated water) W4 to have a pH of 10.5, the resistivity, the boron concentration, the sodium concentration, and the chloride ion concentration of the treatment water W5 were measured. The results are shown in Table 8.

### [Reference Example 2]

In Reference Example 1, the electric deionizer 8 was operated at constant current in the same manner except that NaOH was added in place of NaOH to configure the feed water concentration of Na to be equivalent to that of Reference Example 1, and the pH was configured to be approximately 7. Then, after adding NaOH to the feed water (treated water) W4 to have a pH of 10.5, the resistivity, the boron concentration, the sodium concentration, and the chloride ion concentration of the treatment water W5 were measured. The results are also shown in Table 8.

**[Table 5]**

| Configuration of electric deionizer | |
|---|---|
| Constituent element | Number of cells |
| Desalting chamber | 2 |
| Concentration chamber | 3 |
| Electrode chamber (anode) | 1 |
| Electrode chamber (cathode) | 1 |

**[Table 6]**

| Water flow conditions | |
|---|---|
| Desalting chamber flow rate | 400 mL/min |
| Concentration chamber flow rate | 45 mL/min |
| Electrode chamber flow rate | 50 mL/min |
| Current value | 0.85 A |
| Water flow method | Feed water parallel flow |

**[Table 7]**

| Feed water conditions | |
|---|---|
| Added component | Concentration |
| B(OH)₃ | 10 µg/L as B |
| Na₂SiO₃•9H₂O | 100 µg/L as SiO₂ |
| NaHCO₃ | 135 µg/L as C |

**[Table 8]**

| Measurement item | Reference Example 1 | Reference Example 2 |
|---|---|---|
| Resistivity [MΩ•cm] | 10.5 | 17.3 |
| Boron concentration [µg/L] | Less than 0.5 | Less than 0.5 |
| Sodium concentration [µg/L] | Less than 0.1 | 0.2 |
| Chloride ion concentration [µg/L] | Less than 0.1 | 0.3 |

As is clear from Table 8, upon comparing Reference Example 1 in which the feed water W4 has a high pH, with Reference Example 2 in which a Na load equivalent to Reference Example 1 was applied, the treatment water W5 of Reference Example 1 showed a lower resistivity. On the other hand, upon comparing the ion analysis results of the treatment water W5 between Reference Example 1 and Reference Example 2, the boron concentration is equivalent, and Reference Example 1 shows lower values in Na ions and Cl ions. Thus, in Reference Example 1, the ions that reduce the resistivity of the treatment water W5 can be inferred to be derived from inorganic carbonate originating from NaHCO₃. From this, it is thought that in the case where the pH of the feed water W4 is high, inorganic carbonate ions are ions that easily move from the concentration chambers to the desalting chambers near the outlets of the desalting chambers. Thus, to maintain the water quality of the treatment water W5 of the electric deionizer 8 in the case where the pH of the feed water W4 is high, it can be said that lowering the inorganic carbonate ion concentration of the feed water W4 is effective.

### [Example 2]

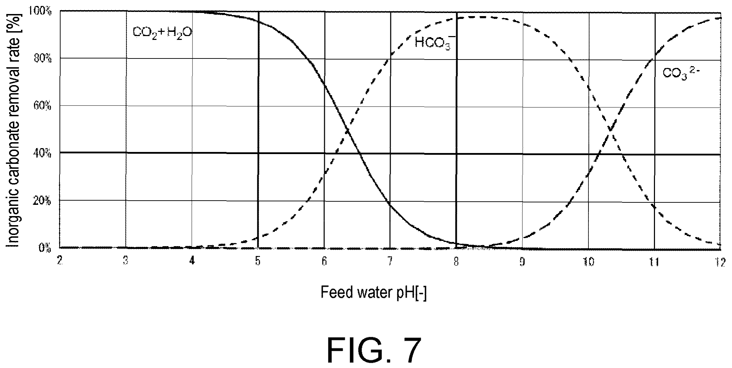

The pH of the feed water of the reverse osmosis membrane device was varied, and changes in the removal rate of inorganic carbonate (IC) associated with this variation were confirmed. ES-20-D4 (manufactured by Nitto Denko Corporation) was used as the reverse osmosis membrane device. The operation was adjusted such that the feed water pressure was 0.75 MPa and the concentration water flow rate was 1.0 m³/h. The removal rate of inorganic carbonate ions when the pH was varied was confirmed under feed water conditions shown in Table 9. The results are shown in FIG. 7, and the removal rate of inorganic carbonate ions in the pH range of 7.5 to 9.5 of the feed water of the reverse osmosis membrane device is shown in Table 10.

**[Table 9]**

| Feed water conditions | |
|---|---|
| Added component | Concentration |
| CaCl₂•2H₂O | 200 µg/L as Ca |
| NH₄F | 50 µg/L as F |
| NaNO₃ | 100 µg/L as NO₃ |
| Na₂SiO₃•9H₂O | 50 µg/L as SiO₂ |
| B(OH)₃ | 10 µg/L as B |
| NaHCO₃ | 2000 µg/L as C |

**[Table 10]**

| Feed water pH | Removal rate |
|---|---|
| 7.5 | 93.6% |
| 8.5 | 98.7% |
| 9.5 | 99.6% |

As is clear from FIG. 7 and Table 10, it is learned that the removal rate of inorganic carbonate by the reverse osmosis membrane device correlates with the existence ratio of each ion, and as the existence ratio of HCO₃⁻ or CO₂⁻ increases, the removal rate of inorganic carbonate in the reverse osmosis membrane device increases. Since the existence ratio in terms of HCO₃⁻ or CO3₂⁻ increases by configuring the pH of the feed water of the reverse osmosis membrane device to 8.0 or higher, the removal rate of inorganic carbonate in the reverse osmosis membrane treatment can be enhanced. If the pH of the feed water of the reverse osmosis membrane device is configured to be 11 or higher, the amount of chemical used increases, and the cost associated with chemicals increases, so the cost effectiveness that contributes to improvement in the water quality of the treatment water decreases. Thus, the pH is desirably configured to be approximately 8 to 11.

### Reference Signs List

- 1: ultrapure water production system
- 2: pretreatment device
- 3: primary pure water production device (pure water production device)
- 4: subsystem
- 5: reverse osmosis membrane device
- 6: ultraviolet oxidation device
- 7: feed water pump
- 8: electric deionizer
- 10: sub tank
- 11: supply pump
- 12: ultraviolet oxidation device
- 13: non-regenerative mixed bed ion exchange device
- 14: ultrafiltration membrane (UF membrane)
- 15: point of use
- 21: anode (electrode)
- 22: cathode (electrode)
- 23: anion exchange membrane
- 24: cation exchange membrane
- 25: desalting chamber
- 26: concentration chamber
- 27: anode chamber
- 28: cathode chamber
- W: raw water
- W1: pretreatment water
- W2: primary pure water (pure water)
- W3: ultrapure water
- W4: treated water (feed water)
- W5: desalted water (treatment water)
- W6: concentration water
- W7: anode discharge water
- W8: cathode discharge water

## Claims

1. An operation method of an electric deionizer, comprising: flowing feed water with a pH of 8 or higher through a desalting chamber of an electric deionizer, and flowing treatment water of the desalting chamber or the feed water of the desalting chamber through a concentration chamber of the electric deionizer in a direction reverse to the desalting chamber.

2. The operation method of an electric deionizer according to claim 1, wherein the pH of the feed water of the electric deionizer is 8 to 11.

3. The operation method of an electric deionizer according to claim 2, wherein an inorganic carbonate concentration of the feed water of the electric deionizer is 1 mg/L as CO₂ or less.

4. The operation method of an electric deionizer according to claim 3, wherein the feed water of the electric deionizer is permeate water of a reverse osmosis membrane.

5. The operation method of an electric deionizer according to any one of claims 1 to 4, wherein concentration water flowing through the concentration chamber of the electric deionizer is switched between the treatment water of the desalting chamber and the feed water of the desalting chamber according to an inorganic carbonate concentration of the feed water of the electric deionizer.
